# FASCICULE DE BREVET EUROPEEN

(11) **EP 2 127 915 B1**
(45) Date de publication et mention de la délivrance du brevet: **26.01.2011**
(21) Numéro de dépôt: 09160468.6
(22) Date de dépôt: 18.05.2009
(51) Int. Cl.: B60G 3/01, B60G 17/015, B60K 7/00, B60K 17/04

(54) **Liaison au sol dotée d'une suspension à barreau plat, et application**
Fahrgestell, das mit einer Aufhängung mit Flachstab ausgerüstet ist, und seine Anwendung
Suspension system equipped with flat-bar suspension and application

(30) Priorité: 20.05.2008 FR 0853273
(43) Date de publication de la demande: 02.12.2009
(73) Titulaire: Société de Technologie MICHELIN, 63000 Clermont-Ferrand (FR); MICHELIN Recherche et Technique S.A., 1763 Granges-Paccot (CH)
(72) Inventeur: Sebe, Marc, 1740, NEYRUZ (CH)
(74) Mandataire: Lasson, Cédric Y. M.

(56) Documents cités:
- WO-A-2007/026198
- WO-A-2007/042870
- FR-A- 2 875 439
- FR-A- 2 898 833

## Description

L'invention concerne, de façon générale, la conception des véhicules terrestres.

Plus précisément, l'invention concerne, selon un premier de ses aspects, une liaison au sol pour un véhicule terrestre comportant au moins un essieu avant et un essieu arrière, cette liaison équipant l'un des essieux et comprenant un porte-roue, une roue portée à rotation autour de son axe par le porte-roue, une coulisse fixée au porte-roue et disposée suivant une direction sensiblement verticale, une glissière montée coulissante le long de la coulisse, un élément suspendu du véhicule, lié à la glissière au moins en translation le long de la coulisse, des moyens électriques d'entraînement portés par le porte-roue et entraînant sélectivement la roue en rotation autour de son axe, et des moyens de suspension influençant le coulissement de l'élément suspendu sur la coulisse.

Certaines au moins de ces caractéristiques sont connues de l'homme du métier, notamment par les documents de brevets EP 0 878 332, EP 1 000 779, WO 2006/032669, WO 2007/006776, WO 2007/026198, et WO 2007/107570 qui comporte les caractéristiques du préambule de la revendication 1.

Conformément à la définition communément admise par l'homme du métier, l'expression "liaison au sol" désigne l'ensemble des organes d'un véhicule terrestre qui assurent notamment, au moins au niveau d'un essieu de ce véhicule, la fonction de roulement de ce véhicule, et de façon plus générale également ses fonctions d'entraînement, de freinage et de suspension.

La conception d'une liaison au sol dont notamment la fonction de suspension est intégrée dans la roue doit surmonter des problèmes difficiles à résoudre en matière d'encombrement et de rigidité, en particulier dans le cas où la charge utile du véhicule à équiper est importante.

L'invention, qui se situe dans ce contexte, a pour but de proposer une architecture permettant de surmonter ces difficultés.

A cette fin, la liaison au sol de l'invention, par ailleurs conforme à la définition générique qu'en donne le préambule ci-dessus, est essentiellement caractérisée en ce que ladite roue équipe un essieu arrière, en ce que la coulisse est constituée par un barreau unique, en ce que le barreau présente une section transversale de forme allongée suivant une direction parallèle au plan médian de la roue, et en ce que les moyens de suspension de chaque roue comprennent au moins un organe de suspension de type élastique, porté par le porte-roue et propre à appliquer entre le porte-roue et l'élément suspendu une force dépendant de la position de coulissement de l'élément suspendu sur le barreau.

Le volume utile du véhicule peut en outre être optimisé en prévoyant que le plan médian de la roue occupe une position décalée vers l'extérieur du véhicule par rapport à la position occupée par le barreau.

Les moyens électriques d'entraînement de la roue comprennent avantageusement deux moteurs électriques dont chacun est porté par le porte-roue, ces moteurs pouvant être disposés symétriquement de part et d'autre du barreau.

De préférence, les moyens de suspension comprennent en outre au moins une machine électrique de suspension liée à l'élément suspendu et associée à un réducteur à deux étages de réduction.

Dans le cas où l'élément suspendu appartient à une traverse de section creuse, la machine électrique de suspension est avantageusement disposée dans cette traverse.

Les moyens de suspension de chaque roue de chaque essieu arrière peuvent par exemple comprendre deux organes de suspension de type élastique disposés symétriquement de part et d'autre du barreau.

Chacun de ces organes de suspension de type élastique peut lui-même comprendre un ressort spiral dont une extrémité est reliée à l'élément suspendu, par exemple au moyen d'une courroie ou d'une chaîne.

Par ailleurs, les moyens électriques d'entraînement de chaque roue de l'un au moins des essieux comprennent avantageusement un résolveur unique et autonome.

Une liaison au sol présentant les caractéristiques précédemment décrites est particulièrement bien adaptée à la réalisation d'un véhicule utilitaire.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en perspective d'un véhicule mettant en oeuvre l'invention;
- la figure 2 est une vue schématique en perspective partielle et écorchée d'un premier mode de réalisation possible d'une structure de roue avant susceptible d'être utilisée, de façon non limitative, sur un véhicule tel qu'illustré à la figure 1;
- la figure 3 est une vue schématique en perspective partielle de la structure de roue illustrée à la figure 2, observée sur son côté interne au véhicule;
- la figure 4 est une vue en coupe partielle, suivant un plan axial horizontal, de la structure de roue avant illustrée aux figures 2 et 3;
- la figure 5 est une vue en élévation de la structure de roue avant illustrée à la figure 4, observée sur son côté interne au véhicule;
- la figure 6 est une vue en coupe partielle, suivant un plan axial horizontal, d'un deuxième mode de réalisation possible d'une structure de roue avant susceptible d'être utilisée, de façon non limitative, sur un véhicule tel qu'illustré à la figure 1;
- la figure 7 est une vue en élévation de la structure de roue avant illustrée à la figure 6, observée sur son côté interne au véhicule;
- la figure 8 est une vue en coupe partielle, suivant un plan axial horizontal, d'un premier mode de réalisation possible d'une structure de roue arrière susceptible d'être utilisée, de façon non limitative, sur un véhicule tel qu'illustré à la figure 1;
- la figure 9 est une vue en élévation de la structure de roue arrière illustrée à la figure 8, observée sur son côté interne au véhicule;
- la figure 10 est une vue en coupe partielle, suivant un plan axial horizontal, d'une variante de la structure de roue arrière illustrée aux figures 8 et 9;
- la figure 11 est une vue en élévation de la structure de roue arrière illustrée à la figure 10, observée sur son côté interne au véhicule;
- la figure 12 est une vue en coupe partielle, suivant un plan axial horizontal, d'un deuxième mode de réalisation possible d'une structure de roue arrière susceptible d'être utilisée, de façon non limitative, sur un véhicule tel qu'illustré à la figure 1; et
- la figure 13 est une vue en élévation de la structure de roue arrière illustrée à la figure 12, observée sur son côté interne au véhicule.

Comme annoncé précédemment, l'invention concerne la conception de véhicules terrestres, en particulier considérés du point de vue de ce que l'homme du métier dénomme la "liaison au sol", c'est-à-dire l'ensemble des organes du véhicule qui assurent notamment, au moins au niveau d'un essieu, la fonction de roulement de ce véhicule, et de façon plus générale également ses fonctions d'entraînement, de freinage et de suspension.

Plus précisément, l'invention concerne la conception de véhicules terrestres dont au moins une liaison au sol est dotée d'une fonction d'entraînement électrique localisée au niveau de la roue.

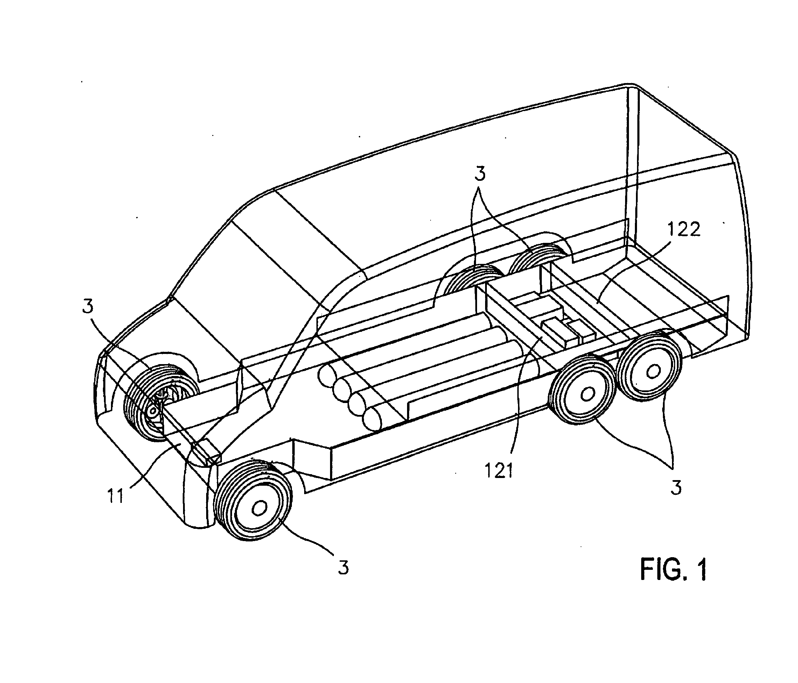

La figure 1 illustre un véhicule du type concerné par l'invention.

Un tel véhicule comprend un essieu avant 11 et au moins un essieu arrière 121, ce véhicule comprenant en l'occurrence un deuxième essieu arrière 122, identique au premier essieu arrière 121.

L'un au moins de ces essieux avant et arrière, et en l'occurrence chacun d'eux dans les différents modes de réalisation illustrés, est équipé, de chaque côté du véhicule, d'un porte-roue 2, d'une roue 3, d'une coulisse telle que 4a à l'avant et 4b à l'arrière, d'une glissière 5, d'un élément suspendu 6 du véhicule, et de moyens de suspension 8.

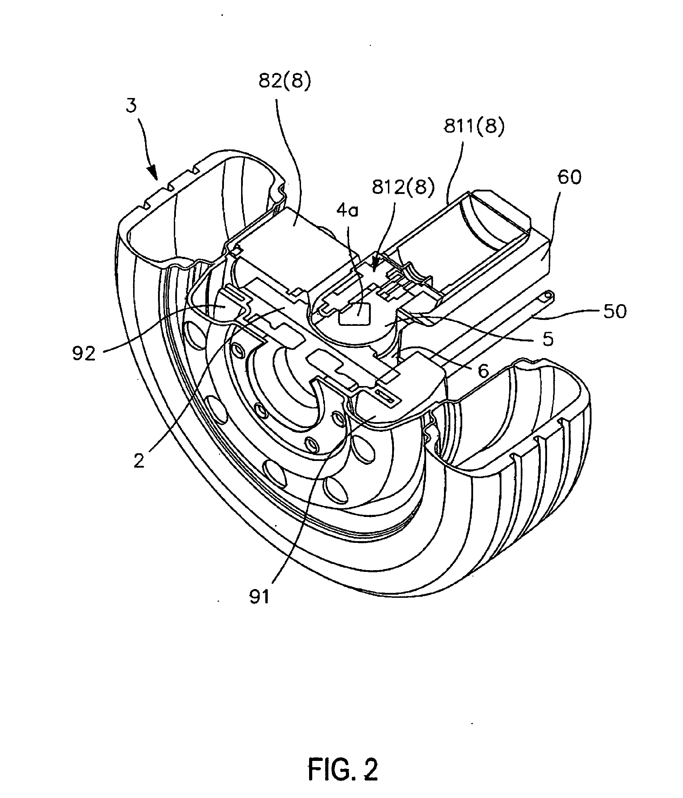

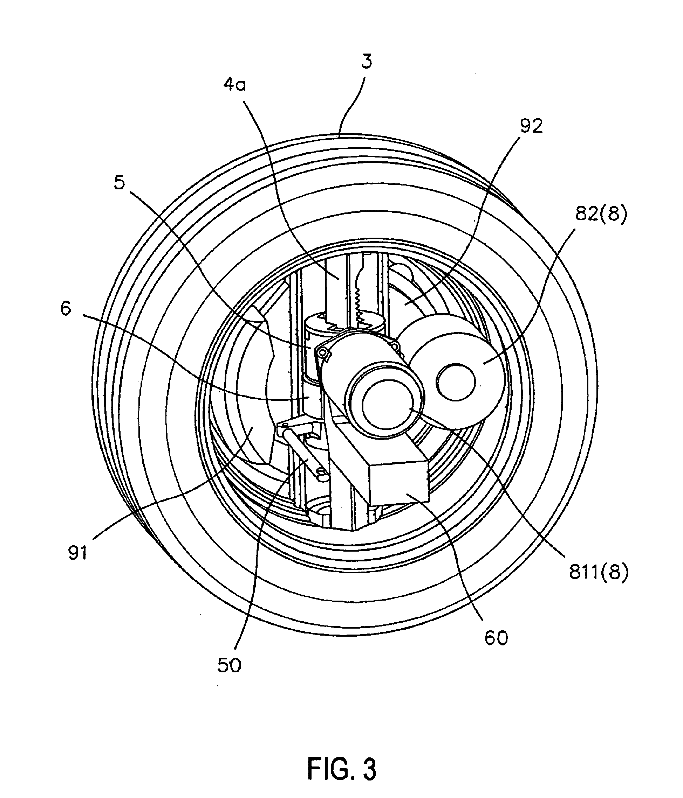

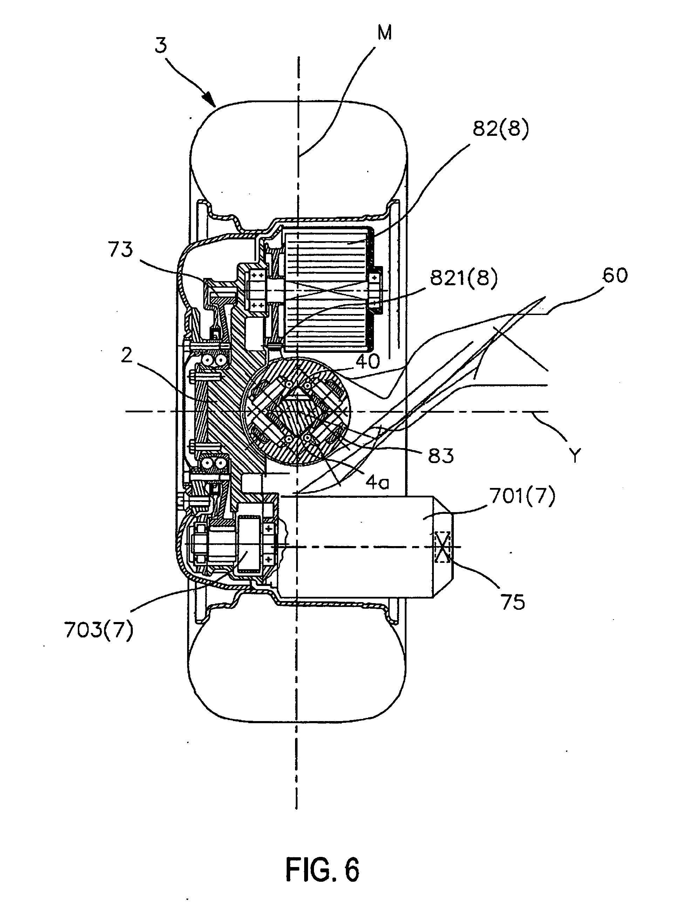

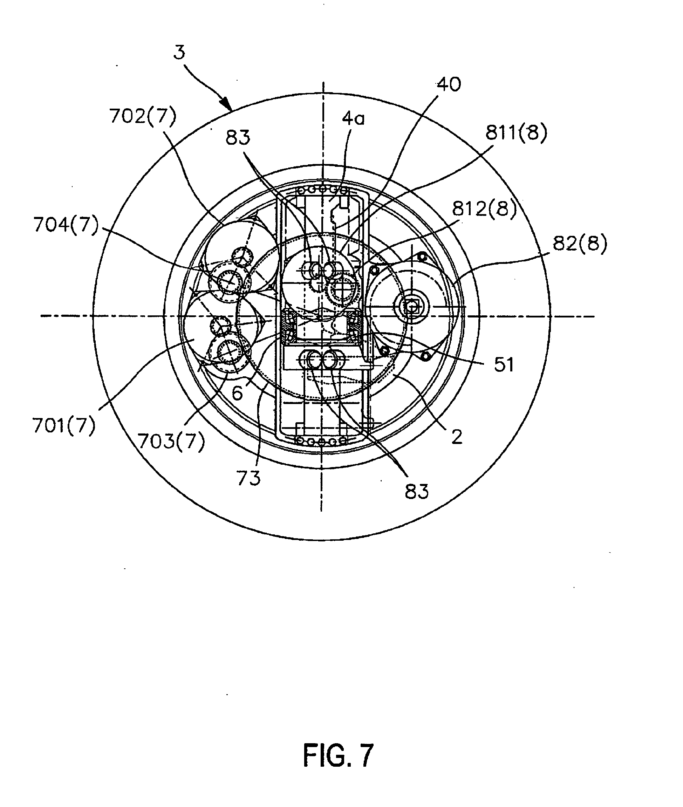

Des moyens électriques d'entraînement 7 sont également prévus pour chaque roue 3 de l'un au moins des essieux, et notamment des essieux arrière 121 et 122, les roues de l'essieu avant 11 pouvant elles-mêmes être motrices (figures 6 et 7) ou non (figures 2 à 5).

Chaque roue 3 est portée à rotation autour de son axe Y par le porte-roue 2, et chaque roue motrice est entraînée en rotation autour de son axe Y par des moyens électriques d'entraînement 7 qui lui sont dédiés et qui sont eux-mêmes portés par le porte-roue 2 associé à cette roue 3.

La coulisse 4a ou 4b associée à chaque roue est également fixée au porte-roue 2 et disposée suivant une direction sensiblement verticale.

Selon un aspect de l'invention, chaque coulisse 4a ou 4b est constituée d'un barreau unique.

Chaque glissière 5 est montée coulissante le long de la coulisse 4a ou 4b correspondante, c'est-à-dire suivant la direction sensiblement verticale, au moyen de galets de suspension 83.

L'élément suspendu 6, qui est typiquement constitué par l'extrémité d'une traverse 60 du véhicule, est lié, au moins en translation le long de la coulisse associée 4a ou 4b, à la glissière 5 correspondante.

Plus précisément, l'élément suspendu 6 est rigidement lié à la glissière 5 correspondante pour chaque roue arrière.

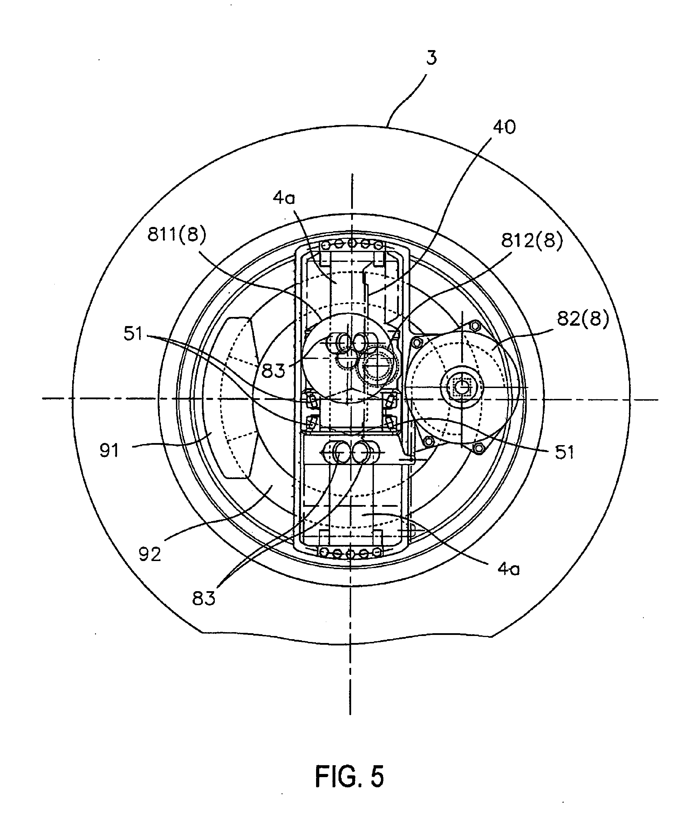

En revanche, pour chaque roue avant, l'élément suspendu 6 est lié à la glissière 5 correspondante en translation le long de la coulisse associée 4a, mais rendue mobile en rotation, grâce à des galets 51 (figures 5 et 7), autour de l'axe longitudinal du barreau 4a constituant cette coulisse afin de permettre les mouvements de braquage de cette roue avant.

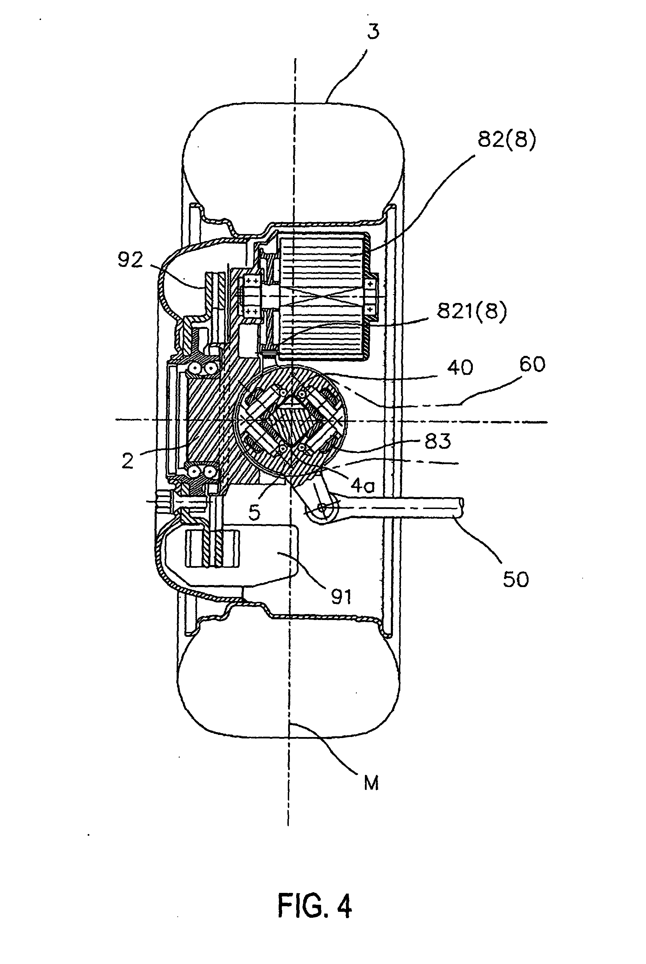

Comme le montre par ailleurs la figure 4, le barreau 4a associé à chaque roue avant 3 s'étend dans l'axe médian M de cette roue, et la glissière 5 est équipée d'une barre de direction articulée 50 qui permet de faire braquer la roue à volonté par rapport à l'élément suspendu 6.

Les moyens de suspension 8 ont quant à eux pour fonction de contrôler le coulissement de l'élément suspendu 6 le long de la coulisse 4a ou 4b, le barreau constituant cette coulisse étant à cette fin doté d'une crémaillère 40.

Comme le véhicule de la figure 1 est doté de deux essieux arrière, 121 et 122, il est possible de répartir la charge du véhicule sur ces deux essieux, et donc d'équiper chacun de ces essieux arrière de roues présentant une largeur inférieure à celle des roues 3 équipant l'essieu avant 11.

De plus, il est possible d'augmenter encore le volume utile du véhicule en prévoyant que le plan médian M de chaque roue 3 de chaque essieu arrière 121 et 122 occupe une position décalée vers l'extérieur du véhicule par rapport à la position occupée par le barreau 4b du porte-roue 2 portant cette roue 3.

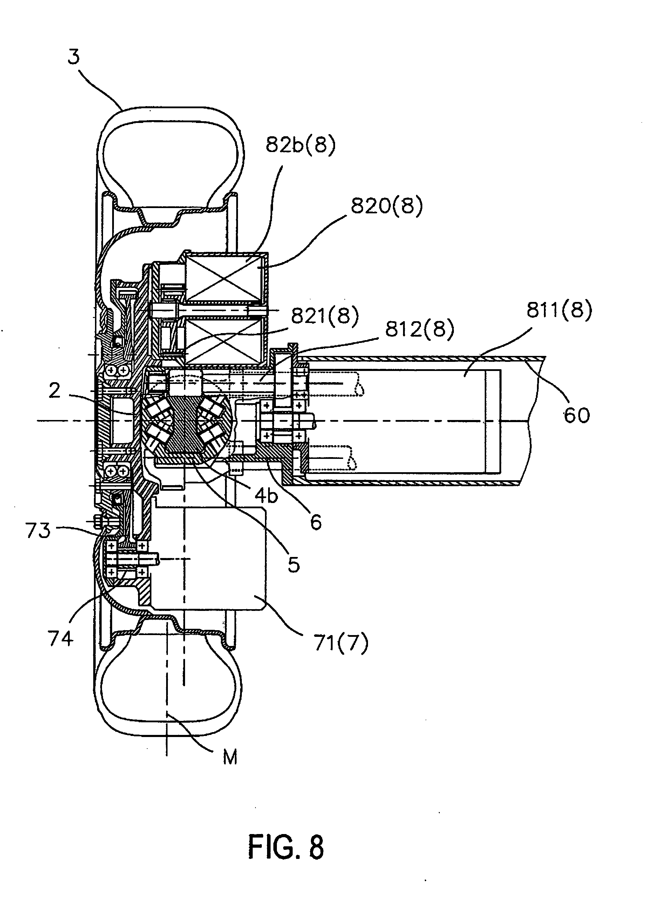

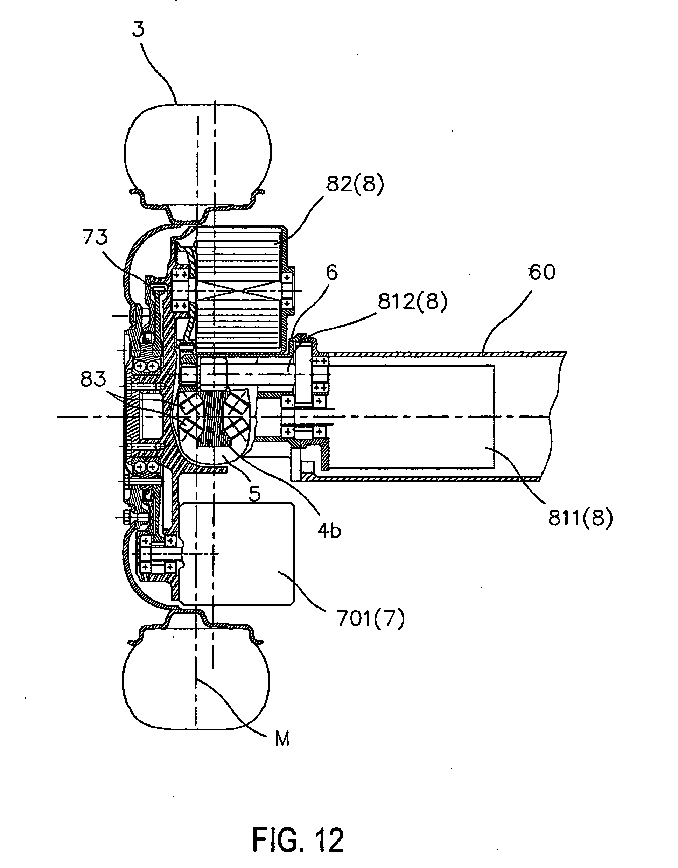

Comme le montrent les figures 8, 10 et 12, le barreau 4b de chaque porte-roue 2 de chacun des essieux arrière 121 et 122 présente en l'occurrence une section en forme de "I", dont la plus grande dimension est sensiblement parallèle au plan médian M de la roue 3 correspondante.

Comme indiqué précédemment, chaque roue avant 3 peut être motrice ou non, cette seconde possibilité étant illustrée aux figures 2 à 5.

Dans ce cas, la fonction de freinage est par exemple réalisée au moyen d'un frein à disque, comprenant un étrier 91 monté sur le porte-roue 2, et un disque 92 solidaire de la roue 3 en rotation autour de l'axe Y.

Dans le cas d'une roue avant motrice (figures 6 et 7), les moyens électriques d'entraînement 7 de cette roue comprennent par exemple une couronne d'entraînement 73, solidaire de cette roue en rotation autour de l'axe Y, et deux moteurs tels que 701 et 702 portés par le porte-roue 2, chacun de ces moteurs étant associé à un réducteur à deux étages de réduction, tel que 703 et 704, transmettant à la couronne 73 le couple fourni par le moteur correspondant.

Comme le montre la figure 6, chacun des moteurs tels que 701 peut aussi être équipé, de façon connue, d'un résolveur 75 disposé au bout de l'arbre de ce moteur et propre à délivrer un signal représentatif de la position angulaire de cet arbre et utilisé pour la commande de ce moteur.

Il convient de noter que l'expression de "moteur électrique" utilisé ici désigne toute machine propre à convertir de l'énergie électrique en un couple moteur, cette expression s'appliquant donc à toute machine également capable d'adopter une configuration dans laquelle elle assure la conversion inverse et dans laquelle elle permet donc de freiner le véhicule par récupération d'énergie électrique, comme décrit dans le document de brevet WO 2007/107570.

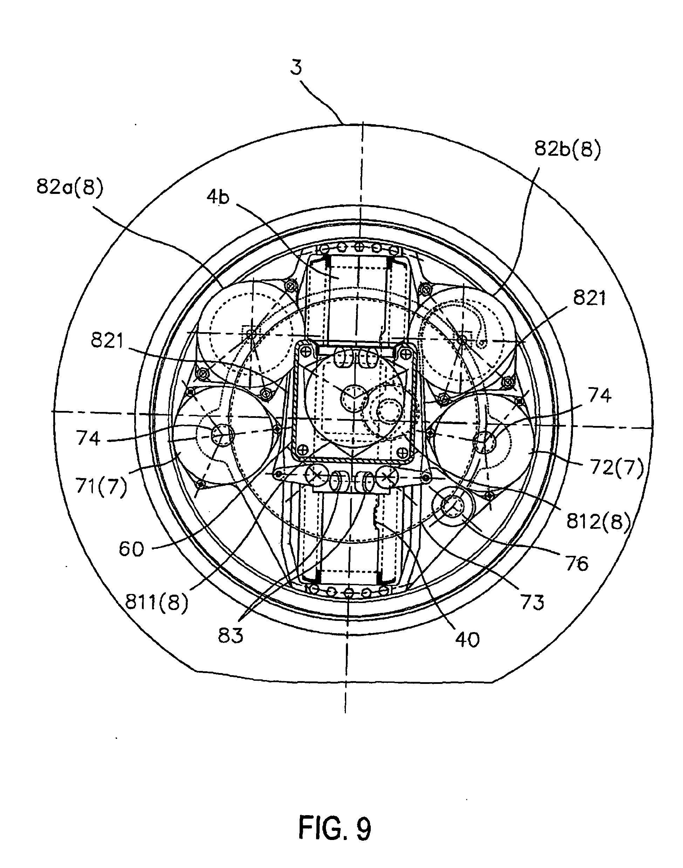

Chaque roue 3 de chacun des essieux arrière 121 et 122 (figures 9, 11, et 13) est de préférence mue par deux moteurs tels que 71, 72 ou 701, 702, dont l'arbre attaque directement la couronne d'entraînement 73, par l'intermédiaire d'un pignon moteur 74 c'est-à-dire sans l'aide d'un réducteur supplémentaire.

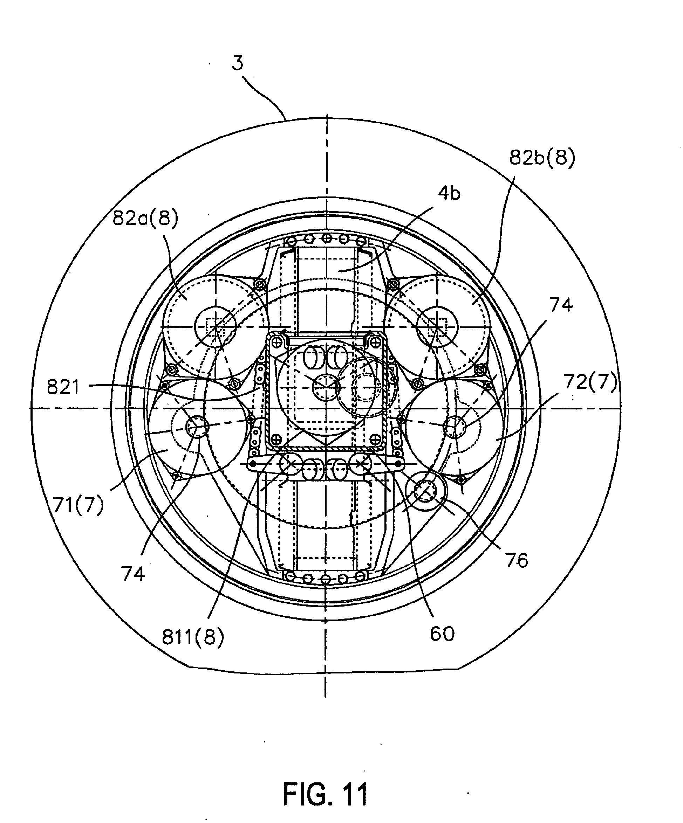

Dans une configuration avantageuse, illustrée aux figures 9 et 11, les moteurs 71 et 72 qui constituent les moyens électriques d'entraînement 7 de chaque roue arrière 3 sont disposés symétriquement de part et d'autre du barreau 4b.

Par ailleurs, comme le montrent également les figures 9 et 11, il peut être judicieux de remplacer le résolveur 75 illustré à la figure 6 et intégré à chaque moteur par un résolveur unique et autonome 76 engrenant avec la couronne d'entraînement 73 et disposé dans une position angulairement décalé par rapport à chaque moteur sur cette couronne.

Une telle disposition procure au moins l'avantage de réduire l'encombrement de chaque moteur suivant sa direction axiale et permet en outre, en exploitant le signal de sortie de ce résolveur unique 76 pour commander chaque moteur tel que 71 ou 72, de se dispenser de la nécessité d'utiliser autant de résolveurs que de moteurs.

Les moyens de suspension de chaque roue 3 comprennent typiquement des moyens électriques, conventionnellement dits "de premier type", et des moyens élastiques, conventionnellement dits "de second type".

Pour chacune des roues 3 de chacun des essieux avant et arrière 11, 121, et 122, les moyens de suspension du premier type comprennent en l'occurrence une machine électrique de suspension 811, la crémaillère 40 du barreau 4a ou 4b, et un réducteur 812 à deux étages de réduction interposé entre l'axe de la machine électrique 811 et la crémaillère 40.

Pour chaque roue 3, la machine électrique de suspension 811 et le réducteur 812 sont liés à la glissière 5 correspondant à cette roue.

Ainsi, dans le mode de réalisation illustré à la figure 2 et relatif à une roue avant, tout braquage de la roue 3 par rapport à la traverse 60 provoque la rotation du barreau 4a autour de son axe longitudinal, donc la rotation concomitante de la glissière 5 et celle de la machine électrique 811 et du réducteur 812 autour de ce même axe longitudinal du barreau.

La situation est la même dans le cas d'une roue 3 équipant l'un quelconque des essieux arrière 121 et 122 (figures 8 à 13), à ceci près que l'élément suspendu 6, qui est typiquement constitué par une extrémité de la traverse 60, est alors fixe par rapport à la glissière 5, de sorte que la machine électrique de suspension 811 et le réducteur 812 sont fixement liés à cet élément suspendu 6.

De façon connue en soi, une telle machine électrique de suspension 811 peut être utilisée pour transformer en puissance électrique les mouvements relatifs de l'élément suspendu 6 par rapport au barreau 4a ou 4b, cette puissance électrique étant elle-même dissipée ou récupérée pour provoquer un amortissement de ces mouvements relatifs.

Grâce à la présence du réducteur 812, qui adopte nécessairement une position décentrée à la fois par rapport à la machine électrique de suspension 811 et par rapport au barreau 4b, il est possible d'aligner cette machine et ce barreau sur la direction longitudinale de la traverse 60.

Ainsi, dans le cas où cette traverse 60 présente une section creuse, la machine électrique de suspension 811 peut être disposée dans cette traverse sur chaque essieu arrière, comme le montrent les figures 8, 10, et 12.

Les moyens de suspension 8 comprennent par ailleurs, pour chaque roue 3, un ou plusieurs organes de suspension élastiques, ou de deuxième type, tels que 82, 82a, ou 82b, chacun de ces organes étant porté par le porte-roue 2 et propre à appliquer entre ce porte-roue 2 et l'élément suspendu 6 une force élastique dépendant de la position de coulissement de l'élément suspendu 6 sur le barreau 4a ou 4b.

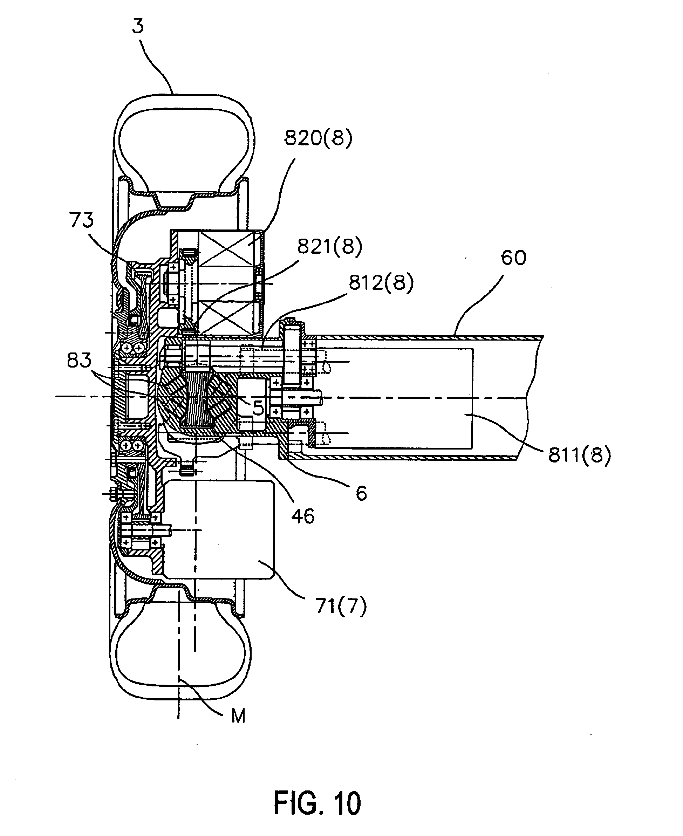

Chaque organe de suspension élastique tel que 82, 82a, et 82b comprend par exemple un ressort spiral 820 dont une extrémité est reliée à l'élément suspendu 6 au moyen d'un lien flexible 821 tel qu'une courroie (figures 4, 6, 8, 12), ou une chaîne (figure 10).

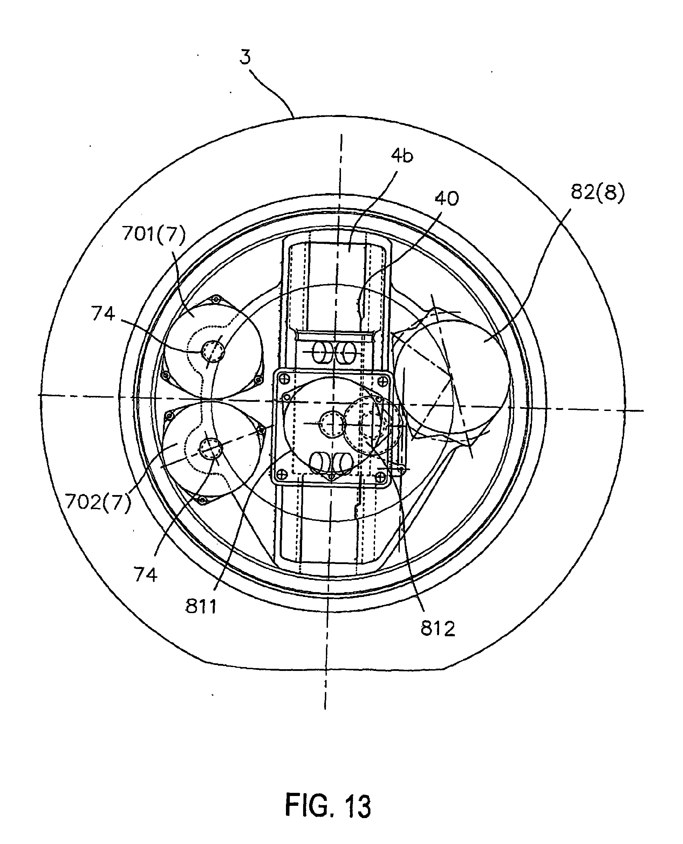

Alors qu'un seul organe de suspension élastique 82 peut suffire sur chaque roue de l'essieu avant 11 (figures 2 à 7), voire sur chaque roue d'essieu arrière (figure 13), il est plus judicieux d'équiper chaque roue d'essieu arrière de deux organes de suspension élastiques 82a et 82b.

Dans ce cas, illustré aux figures 9 et 11, ces organes de suspension élastiques 82a et 82b sont en l'occurrence disposés symétriquement de part et d'autre du barreau 4b, comme le sont de préférence les moteurs 71 et 72 qui constituent les moyens électriques d'entraînement 7 de cette roue 3.

## Revendications

1. Liaison au sol pour un véhicule terrestre comportant au moins un essieu avant (11) et un essieu arrière (121, 122), cette liaison équipant l'un des essieux (121) et comprenant un porte-roue (2), une roue (3) portée à rotation autour de son axe (Y) par le porte-roue (2), une coulisse (4b) fixée au porte-roue (2) et disposée suivant une direction sensiblement verticale, une glissière (5) montée coulissante le long de la coulisse (4b), un élément suspendu (6) du véhicule, lié à la glissière (5) au moins en translation le long de la coulisse (4b), des moyens électriques d'entraînement (7) portés par le porte-roue (2) et entraînant sélectivement la roue (3) en rotation autour de son axe (Y), et des moyens de suspension (8) influençant le coulissement de l'élément suspendu (6) sur la coulisse (4b), **caractérisée en ce que** ladite roue (3) équipe un essieu arrière (121), **en ce que** la coulisse (4b) est constituée par un barreau unique (4b), **en ce que** le barreau (4b) présente une section transversale de forme allongée suivant une direction parallèle au plan médian (M) de la roue (3), et **en ce que** les moyens de suspension (8) comprennent au moins un organe de suspension (82) de type élastique porté par le porte-roue (2) et appliquant entre le porte-roue (2) et l'élément suspendu (6) une force dépendant de la position de coulissement de l'élément suspendu (6) sur le barreau (4b).

2. Liaison au sol suivant la revendication 1, **caractérisée en ce que** le plan médian (M) de la roue (3) occupe une position décalée vers l'extérieur du véhicule par rapport à la position occupée par le barreau (4b).

3. Liaison au sol suivant l'une quelconque des revendications précédentes, **caractérisée en ce que** les moyens de suspension (8) comprennent au moins une machine électrique de suspension (811) liée à l'élément suspendu (6) et associée à un réducteur (812) à deux étages de réduction.

4. Liaison au sol suivant la revendication 3, **caractérisée en ce que** ledit élément suspendu (6) appartient à une traverse (60) de section creuse, et **en ce que** la machine électrique de suspension (811) est disposée dans la traverse (60).

5. Liaison au sol suivant l'une quelconque des revendications précédentes, **caractérisée en ce que** les moyens électriques d'entraînement (7) de la roue (3) comprennent deux moteurs électriques (701, 702; 71, 72) dont chacun est porté par le porte-roue (2).

6. Liaison au sol suivant la revendication 5, **caractérisée en ce que** les moteurs électriques d'entraînement (71, 72) de la roue (3) sont disposés symétriquement de part et d'autre du barreau (4b).

7. Liaison au sol suivant l'une quelconque des revendications précédentes, **caractérisée en ce que** les moyens de suspension (8) comprennent deux organes de suspension (82a, 82b) de type élastique disposés symétriquement de part et d'autre du barreau (4b).

8. Liaison au sol suivant la revendication 7, **caractérisée en ce que** chaque organe de suspension (82, 82a, 82b) de type élastique comprend un ressort spiral (820) dont une extrémité est reliée à l'élément suspendu (6), par exemple au moyen d'une courroie ou d'une chaîne (821).

9. Liaison au sol suivant l'une quelconque des revendications précédentes, **caractérisée en ce que** les moyens électriques d'entraînement (7) de chaque roue de l'un au moins des essieux comprennent un résolveur unique et autonome (76).

10. Application d'une liaison au sol suivant l'une quelconque des revendications précédentes à la réalisation d'un véhicule utilitaire.

## Claims

1. Suspension system for a ground vehicle comprising at least one front axle (11) and one rear axle (121, 122), said system fitted onto one of the axles (121) and comprising a wheel carrier (2), a wheel (3) rotated about its axis (Y) by the wheel carrier (2), a slideway (4b) fixed to the wheel carrier (2) and arranged in a substantially vertical direction, a slide (5) slidably mounted along the slideway (4b), a suspended element (6) of the vehicle, connected to the slide (5) at least in translation along the slideway (4b), electrical drive means (7) carried by the wheel carrier (2) and selectively driving the wheel (3) in rotation about its axis (Y) and suspension means (8) influencing the sliding of the suspended element (6) on the slideway (4b), **characterized in that** said wheel (3) is fitted onto a rear axle (121), **in that** the slideway (4b) consists of a single bar (4b), **in that** the bar (4b) has an elongated cross section in a direction parallel to the median plane (M) of the wheel (3), and **in that** the suspension means (8) comprise at least one suspension member (82) of resilient type carried by the wheel carrier (2) and applying between the wheel carrier (2) and the suspended element (6) a force depending on the sliding position of the suspended element (6) on the bar (4b).

2. Suspension system according to Claim 1, **characterized in that** the median plane (M) of the wheel (3) occupies a position which is offset towards the exterior of the vehicle relative to the position occupied by the bar (4b).

3. Suspension system according to any one of the preceding claims, **characterized in that** the suspension means (8) comprise at least one electrical suspension machine (811) connected to the suspended element (6) and associated with a reduction gear (812) with two reduction stages.

4. Suspension system according to Claim 3, **characterized in that** said suspended element (6) forms part of a cross member (60) of hollow section and **in that** the electrical suspension machine (811) is arranged in the cross member (60).

5. Suspension system according to any one of the preceding claims, **characterized in that** the electrical drive means (7) of the wheel (3) comprise two electrical motors (701, 702; 71, 72), each of which is carried by the wheel carrier (2).

6. Suspension system according to Claim 5, **characterized in that** the electrical drive motors (71, 72) of the wheel (3) are arranged symmetrically on both sides of the bar (4b).

7. Suspension system according to any one of the preceding claims, **characterized in that** the suspension means (8) comprise two suspension members (82a, 82b) of resilient type arranged symmetrically on both sides of the bar (4b).

8. Suspension system according to Claim 7, **characterized in that** each suspension member (82, 82a, 82b) of resilient type comprises a spiral spring (820) of which one end is connected to the suspended element (6), for example by means of a belt or a chain (821).

9. Suspension system according to any one of the preceding claims, **characterized in that** the electrical drive means (7) of each wheel of at least one of the axles comprise a single and independent resolver (76).

10. Application of a suspension system according to any one of the preceding claims to the production of a utility vehicle.

## Patentansprüche

1. Bodenverbindung für ein Landfahrzeug mit mindestens einer Vorderachse (11) und einer Hinterachse (121, 122), wobei diese Verbindung an einer der Achsen (121) vorgesehen ist und einen Radhalter (2), ein durch den Radhalter (2) drehbar um seine Achse (Y) getragenes Rad (3), eine an dem Radhalter (2) befestigte Gleitbahn (4b), die entlang einer im Wesentlichen vertikalen Richtung angeordnet ist, eine entlang der Gleitbahn (4b) verschiebbar angebrachte Gleitführung (5), ein aufgehängtes Element (6) des Fahrzeugs, das mit der Gleitführung (5) zumindest für eine Translationsbewegung entlang der Gleitbahn (4b) verbunden ist, elektrische Antriebsmittel (7), die von dem Radhalter (2) getragen werden und das Rad (3) gezielt um seine Achse (Y) drehbar antreiben, und Aufhängungsmittel (8), die das Verschieben des aufgehängten Elements (6) auf der Gleitbahn (4b) beeinflussen, enthält, **dadurch gekennzeichnet, dass** das Rad (3) an einer Hinterachse (121) vorgesehen ist, die Gleitbahn (4b) aus einer einzigen Stange (4b) besteht, die Stange (4b) einen Querschnitt länglicher Form entlang einer parallel zur Mittelebene (M) des Rads (3) verlaufenden Richtung aufweist, und die Aufhängungsmittel (8) mindestens ein Aufhängungsglied (82) elastischer Art umfassen, das von dem Radhalter (2) getragen wird und zwischen dem Radhalter (2) und dem aufhängten Element (6) eine Kraft anlegt, die von der Gleitposition des aufgehängten Elements (6) auf der Stange (4b) abhängig ist.

2. Bodenverbindung nach Anspruch 1, **dadurch gekennzeichnet, dass** die Mittelebene (M) des Rads (3) eine nach bezüglich der von der Stange (4b) eingenommenen Position außen des Fahrzeugs versetzte Position einnimmt.

3. Bodenverbindung nach einem der vorhergehenden Ansprüche, **dadurch gekennzeichnet, dass** die Aufhängungsmittel (8) mindestens eine elektrische Aufhängungsmaschine (811) umfassen, die mit dem aufgehängten Element (6) verbunden sind und einem Untersetzungsgetriebe (812) mit zwei Untersetzungsstufen zugeordnet sind.

4. Bodenverbindung nach Anspruch 3, **dadurch gekennzeichnet, dass** das aufgehängte Element (6) Teil eines Querträgers (60) mit hohlem Querschnitt bildet und die elektrische Aufhängungsmaschine (811) in dem Querträger (60) angeordnet ist.

5. Bodenverbindung nach einem der vorhergehenden Ansprüche, **dadurch gekennzeichnet, dass** die elektrischen Antriebsmittel (7) für das Rad (3) zwei Elektromotoren (701, 702; 71, 72) umfassen, von denen jeder von dem Radhalter (2) getragen wird.

6. Bodenverbindung nach Anspruch 5, **dadurch gekennzeichnet, dass** die elektrischen Antriebsmotoren (71, 72) des Rads (3) symmetrisch auf beiden Seiten der Stange (4b) angeordnet sind.

7. Bodenverbindung nach einem der vorhergehenden Ansprüche, **dadurch gekennzeichnet, dass** die Aufhängungsmittel (8) zwei Aufhängungsglieder (82a, 82b) elastischer Art umfassen, die symmetrisch auf beiden Seiten der Stange (4b) angeordnet sind.

8. Bodenverbindung nach Anspruch 7, **dadurch gekennzeichnet, dass** jedes Aufhängungsglied (82a, 82b) elastischer Art eine Spiralfeder (820) umfasst, von der ein Ende zum Beispiel mittels eines Riemens oder einer Kette (821) mit dem aufgehängten Element (6) verbunden ist.

9. Bodenverbindung nach einem der vorhergehenden Ansprüche, **dadurch gekennzeichnet, dass** die elektrischen Antriebsmittel (7) jedes Rads mindestens einer der Achsen einen einzigen und unabhängigen Resolver umfassen.

10. Anwendung einer Bodenverbindung nach einem der vorhergehenden Ansprüche auf die Herstellung eines Nutzfahrzeugs.
